# EUROPÄISCHE PATENTSCHRIFT

(11) **EP 4 469 273 B1**
(45) Veröffentlichungstag und Bekanntmachung des Hinweises auf die Patenterteilung: **10.09.2025**
(21) Anmeldenummer: 23701736.3
(22) Anmeldetag: 25.01.2023
(51) Int. Cl.: B32B 17/00, B60J 1/00, B60Q 3/208, G02B 6/00

(54) **BELEUCHTBARE VERGLASUNG**
ILLUMINABLE GLAZING
VITRAGE POUVANT ÊTRE ÉCLAIRÉ

(30) Priorität: 28.01.2022 EP 22153875
(43) Veröffentlichungstag der Anmeldung: 04.12.2024
(73) Patentinhaber: Saint-Gobain Sekurit France, 60150 Thourotte (FR)
(72) Erfinder: DO ROSARIO, Jefferson, 52134 Herzogenrath (DE); ZEICHNER, Achim, 52134 Herzogenrath (DE); MANDELARTZ, Matthias, 52134 Herzogenrath (DE); SARKISSIAN, Pierre, 52134 Herzogenrath (DE)
(74) Vertreter: SGR Germany-Patents
(86) Internationale Anmeldenummer: PCT/EP2023/051739
(87) Internationale Veröffentlichungsnummer: WO 2023/144169

(56) Entgegenhaltungen:
- WO-A1-2007/077099
- WO-A1-2014/167291
- US-A1- 2014 240 997
- US-A1- 2014 254 187

## Beschreibung

Die Erfindung betrifft eine Verglasungsanordnung mit einer Lichtquelle und einem Lichtauskopplungsmittel, ein Verfahren zu deren Herstellung und deren Verwendung.

Kraftfahrzeuge verfügen im Innenraum über eine Lichtverteilung, die je nach Bedarf für eine dezente oder auffallende Ausleuchtung des Innenraums sorgt. Die Beleuchtung sorgt nicht nur für Orientierung im Fahrzeug, sondern kreiert auch eine angenehme Atmosphäre für Insassen. Verbundscheiben als Verglasungen aus zwei oder mehreren gläsernen oder polymeren Scheiben werden in Fahrzeugen als Windschutzscheiben, Heckscheiben, Seitenscheiben und Dachscheiben eingesetzt. Bei beleuchtbaren oder beleuchteten Verglasungen wird unter Ausnutzung der Totalreflexion Licht einer Lichtquelle in einen flächigen Lichtleiter in Form einer Scheibe der Verglasung eingekoppelt.

WO 2010/049638 A1, WO 2013/053629 A1, WO 2014060409 A1 oder WO 2015/095288 A2 offenbaren die Einkopplung von Licht über eine Seitenfläche in eine Glasscheibe. Wenn die Lichtquelle sehr nah an der Glaskante platziert wird, kann auf diese Weise sehr effizient und über die gesamte Breite des Lichtleiters Licht in den Lichtleiter eingekoppelt werden. Dadurch kann eine sehr homogene flächige Beleuchtung erreicht werden. Aus der WO2013/110885 A1, WO2018178591 A1 oder WO2019/105855 A1 ist bekannt die Lichtquelle in eine Ausnehmung anzuordnen und dadurch das Licht in die Scheibe einzukoppeln.

Die Lichtreflektionen gelangen durch mehrfaches Reflektieren an den parallelen Oberflächen der Scheibe bis in den Randbereich der Scheibe, wo sie wieder aus der Scheibe austreten können. Dies erzeugt einen beleuchteten Randbereich. Dieser unerwünschte Lichteffekt im Randbereich der Scheibe ist durch einen Betrachter gut wahrnehmbar.

WO 2007/077099 A1, WO 2014/167291 A1, US 2014/240997 A1 und US 2014/254187 A1 offenbaren beleuchtete Verglasungsanordnungen, bei denen im Randbereich ein Abdeckdruck vorgesehen ist.

Die Aufgabe der vorliegenden Erfindung besteht darin, eine verbesserte Verglasungsanordnung bereitzustellen, bei der in die Scheibe eingekoppeltes Licht nicht als Streulicht im Randbereich der Scheibe wahrgenommen werden kann.

Diese Aufgabe wird gelöst durch eine Verglasungsanordnung gemäß Anspruch 1. Bevorzugte Ausführungen gehen aus den Unteransprüchen hervor.

Die erfindungsgemäße Verglasungsanordnung umfasst mindestens eine erste Scheibe, eine Lichtquelle zum Erzeugen von in die erste Scheibe einkoppelbarem Licht und ein Lichtauskopplungsmittel zum Auskoppeln von Licht aus der ersten Scheibe, wobei die Scheibe dazu vorgesehen ist, eingekoppeltes Licht zumindest teilweise weiterzuleiten. Die erste Scheibe weist mindestens eine erste Oberfläche und eine zweite Oberfläche auf. Die Lichtauskopplungsmittel sind dazu vorgesehen, das Licht über eine der zwei Oberflächen auszukoppeln. Die erste Scheibe ist über eine Zwischenschicht mit einer zweiten Scheibe zu einer Verbundscheibe verbunden.

Die Verglasungsanordnung umfasst auch einen Randbereich, der sich von einer Scheibenkante der ersten Scheibe über mindestens 1 mm bis höchstens 500 mm auf einer der Oberflächen (III, IV) der ersten Scheibe erstreckt sowie ein Absorptionsmittel zur Absorption von in der ersten Scheibe eingekoppeltem Licht, das in dem Randbereich angeordnet ist. Das Absorptionsmittel ist als eine erste Abdeckschicht ausgebildet. Da eine Lichtauskopplung an den Rändern der Verbundscheibe nicht gewünscht ist, weist der Randbereich der ersten Scheibe die Abdeckschicht auf, welche das Streulicht absorbiert. Dadurch wird mit geringem Aufwand Streulicht im Randbereich der Verbundscheibe verhindert.

Vorzugsweise ist vorgesehen, dass die erste Abdeckschicht an der ersten Oberfläche der ersten Scheibe angeordnet ist. Alternativ oder zusätzlich kann die erste Abdeckschicht an der zweiten Oberfläche (III) der ersten Scheibe angeordnet sein.

In einer besonders bevorzugten Ausführungsform weist die zweite Scheibe eine zweite Abdeckschicht auf. Dadurch wird das Streulicht im Randbereich an beiden Hauptoberflächen der Verbundscheibe absorbiert. Die erste Abdeckschicht kann sich von der Scheibenkante der ersten Scheibe über 1 mm bis 500 mm, bevorzugt 10 mm bis 150 mm, besonders bevorzugt 10 mm bis 15 mm erstrecken. Insbesondere überlappen sich die erste Abdeckschicht und die zweite Abdeckschicht zumindest teilweise in Durchsichtrichtung der Verbundscheibe.

In einer Weiterbildung der Erfindung sind die erste Abdeckschicht und/oder die zweite Abdeckschicht blickdicht. Mit anderen Worten können die erste und zweite Abdeckschicht opak ausgebildet sein. Der Begriff "opak" bezeichnet eine mangelnde Durchsichtigkeit. Opak bedeutet im Sinne der Erfindung, dass ein Betrachter nicht durch die Zwischenschicht oder Abdeckschicht hindurchblicken kann

Die Abdeckschichten werden auch als Abdeckdruck oder Schwarzdruck bezeichnet. Der Abdeckdruck ist aus einer Druckfarbe ausgebildet. Die erste Abdeckschicht und/oder die zweite Abdeckschicht können aus einer opaken Emaille ausgebildet sein, bevorzugt aufgebracht als Siebdruck oder als Digitaldruck. Die Emaille kann Glasfritten und/oder mineralische Fritten und optional mindestens ein Pigment enthalten, bevorzugt Glasfritten und/oder mineralische Fritten auf Basis von Oxiden ausgewählt aus Bor, Wismut, Zink, Silizium, Aluminium und Natrium. Das Pigment sorgt für die Opazität der Abdeckschicht. Das Pigment kann ein Schwarzpigment, beispielsweise Pigmenttruß (Carbon Black), Anilinschwarz, Beinschwarz, Eisenoxidschwarz, Spinellschwarz und/oder Graphit sein. Alternativ können die erste und/oder zweite Abdeckschicht als ein insbesondere schwarzes Klebeband oder ein Grundschicht, sogenannter Primer, ausgebildet sein. Der Primer kann eine Sol-Gel-Schicht aus Siliziumoxid in Mischung mit anderen anorganischen Oxiden umfassen. Die Abdeckschichten können eine Schichtdicke von 5 µm bis 15 µm aufweisen.

In einer weiteren Ausführungsform umfasst die Verbundscheibe eine umlaufende Scheibenkante, wobei das Absorptionsmittel zumindest abschnittsweise entlang der umlaufenden Scheibenkante angeordnet ist oder das Absorptionsmittel kann sich umlaufend entlang der gesamten umlaufenden Scheibenkante erstrecken. Die Verbundscheibe weist einen Durchsichtbereich auf, in dem die Verbundscheibe keine Abdeckschicht aufweist. Der Durchsichtbereich der Verbundscheibe macht mindestens 30%, bevorzugt 50% der Fläche der Verbundscheibe aus. Ist die Verbundscheibe als eine Dachscheibe oder Windschutzscheibe ausgebildet, kann der Durchsichtbereich mindestens 70% oder mindestens 80 % der Fläche der Verbundscheibe ausmachen.

In einer weiteren Ausführungsform kann die Lichtquelle mindestens eine oder mehrere Leuchtdioden (LED) umfassen. Diese Art von Lichtquellen ist besonders hell und effektiv.

Die erste Scheibe weist mindestens eine Aussparung zu Aufnahme der Lichtquelle auf. Dadurch kann eine Verringerung des in die Umgebung außerhalb der Verbundscheibe gestreuten Lichtes und eine verbesserte Lichteinkopplung in die erste Scheibe erzielt werden. Bei einer Verglasungsanordnung mit einer Aussparung in der ersten Scheibe kann sich die erste Abdeckschicht von der Scheibenkante bis zu der Aussparung erstrecken. Die Lichtquelle kann bei einer Anordnung in der Aussparung in Durchsichtrichtung von der zweiten Abdeckschicht überdeckt sein.

Als erste Scheibe und zweite Scheibe sind im Grunde alle elektrisch isolierenden Substrate geeignet, die unter den Bedingungen der Herstellung und der Verwendung der Verbundscheibe thermisch und chemisch stabil sowie dimensions-stabil sind.

Die erste Scheibe und die zweite Scheibe enthalten bevorzugt Glas, besonders bevorzugt Floatglas aus klarem Glas, ganz besonders bevorzugt Diamantglas. Alternativ können die Scheiben auch Flachglas, wie Kalk-Natron-Glas, Borosilikatglas oder Quarzglas, oder klare Kunststoffe, starre klare Kunststoffe, insbesondere Polyethylen, Polypropylen, Polycarbonat, Polymethylmethacrylat, Polystyrol, Polyamid, Polyester, Polyvinylchlorid und/oder Gemische davon, enthalten. Die erste Scheibe und/oder zweite Scheibe sind bevorzugt transparent, insbesondere für die Verwendung der Scheiben als Dachscheibe, Windschutzscheibe oder Rückscheibe eines Fahrzeugs oder anderen Verwendungen bei denen eine hohe Lichttransmission erwünscht ist. Insbesondere besteht zumindest die erste Scheibe und bevorzugt auch die zweite Scheibe aus Klarglas.

Eine Beschichtung, insbesondere eine Scheibe oder ein Gegenstand wird als transparent verstanden, wenn die Beschichtung, die Scheibe oder der Gegenstand eine Transmission im sichtbaren Spektralbereich von größer 20%, bevorzugt 50%, besonders bevorzugt von größer 70 %, insbesondere von größer 85% aufweist.

Für Scheiben, die nicht im verkehrsrelevanten Sichtfeld des Fahrers liegen, beispielsweise für Dachscheiben, kann die Transmission aber auch viel geringer sein, beispielsweise größer als 5 %. Dazu kann beispielsweise die zweite Scheibe und/oder die Zwischenschicht getönt oder gefärbt sein.

Die Dicke der ersten Scheibe und/oder zweiten Scheibe kann breit variieren und so hervorragend den Erfordernissen des Einzelfalls angepasst werden. Vorzugsweise werden Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, verwendet. Die Größe der Scheiben kann breit variieren und richtet sich nach der Größe der erfindungsgemäßen Verwendung. Die erste Scheibe und zweite Scheibe weisen beispielsweise im Fahrzeugbau und Architekturbereich übliche Flächen von 200 cm² bis zu 20 m² auf.

Die Verbundscheibe kann eine beliebige dreidimensionale Form aufweisen. Vorzugsweise hat die dreidimensionale Form keine Schattenzonen, so dass sie beispielsweise durch Kathodenzerstäubung mit weiteren Beschichtungen beschichtet werden kann. Bevorzugt sind die Scheiben planar oder leicht oder stark in einer Richtung oder in mehreren Richtungen des Raumes gebogen. Insbesondere werden planare Substrate verwendet. Die Scheiben können farblos oder gefärbt sein.

Die erste Scheibe und die zweite Scheibe werden durch mindestens die Zwischenschicht miteinander verbunden. Die Zwischenschicht ist bevorzugt transparent oder getönt oder gefärbt. Die Zwischenschicht enthält vorzugsweise mindestens einen Kunststoff, bevorzugt Polyvinylbutyral (PVB), Ethylenvinylacetat (EVA) und / oder Polyethylenterephthalat (PET) oder besteht daraus. Die Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und/oder Ethylen-Tetrafluorethylen, oder Copolymere oder Gemische davon enthalten. Die Zwischenschicht kann durch eine oder auch durch mehrere übereinander angeordnete Folien ausgebildet werden, wobei die Dicke einer Folie bevorzugt von 0,025 mm bis 1 mm beträgt, typischerweise 0,38 mm oder 0,76 mm. Die Zwischenschichten können bevorzugt thermoplastisch sein und nach der Lamination die erste Scheibe, die zweite Scheibe und eventuelle weitere Zwischenschichten miteinander verkleben. Besonders vorteilhaft sind sogenannte akustik-dämpfende Zwischenschichten, die bevorzugt aus drei Lagen PVB bestehen, wobei die mittlere Lage weicher ausgebildet ist als die zwei äußeren Lagen.

Die Zwischenschicht kann auch eine funktionale Schicht aufweisen, insbesondere eine Infrarotstrahlung reflektierende Schicht, eine Infrarotstrahlung absorbierende Schicht, eine UV-Strahlung absorbierende Schicht, eine zumindest abschnittsweise gefärbte Schicht und/oder eine zumindest abschnittsweise getönte Schicht. So kann die thermoplastische Zwischenschicht beispielsweise auch ein Bandfilter sein.

Die Begriffe "erste Scheibe" und "zweite Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Verbundscheibe beispielsweise dafür vorgesehen, in einer Öffnung, beispielsweise eines Fahrzeugs oder eines Gebäudes, den Innenraum gegenüber der äußeren Umgebung abzutrennen, so kann die erste Scheibe dem Innenraum oder der äußeren Umgebung zugewandt sein.

In einer vorteilhaften Ausgestaltung ist die Verbundscheibe eine Dachscheibe eines Kraftfahrzeugs, wobei die erste Scheibe die Innenscheibe ist und die zweite Scheibe die Außenscheibe ist.

Ferner kann die erste Scheibe und/oder die zweite Scheibe weitere geeignete Beschichtungen aufweisen, beispielsweise eine Antireflexionsbeschichtung, eine Antihaftbeschichtung, eine Antikratzbeschichtung, eine photokatalytische Beschichtung, eine Sonnenschutzbeschichtung und/oder Low-E-Beschichtung.

Weiterhin kann die Verglasungsanordnung optional weitere funktionelle Elemente, insbesondere elektronisch steuerbare optische Elemente umfassen, beispielsweise PDLC-Elemente, elektrochrome Elemente oder ähnliches, die typischerweise zwischen der ersten Scheibe und der zweiten Scheibe angeordnet sind.

Die erste Scheibe und die zweite Scheibe werden über die Zwischenschicht miteinander laminiert, beispielsweise durch Autoklavverfahren, Vakuumsackverfahren, Vakuumringverfahren, Kalanderverfahren, Vakuumlaminatoren oder Kombinationen davon. Die Verbindung der Scheibe erfolgt dabei üblicherweise unter Einwirkung von Hitze, Vakuum und/oder Druck.

In einem weiteren Aspekt umfasst die vorliegende Erfindung ein Fahrzeug, insbesondere Personenkraftwagen, mit einer erfindungsgemäßen Verglasungsanordnung.

In einem weiteren Aspekt umfasst die vorliegende Erfindung ein Verfahren zur Herstellung der erfindungsgemäßen Verglasungsanordnung, mindestens umfassend:
- Bereitstellen einer ersten Scheibe, einer zweiten Scheibe und einer thermoplastischen Zwischenschicht,
- Aufbringen eines Absorptionsmittels in dem Randbereich an der ersten Scheibe,
- das Absorptionsmittel wird eingebrannt,
- Anordnen von mindestens einer Lichtquelle an der ersten Scheibe,
- Anordnen eines Lichtauskopplungsmittels an einer ersten Oberfläche (IV) und/oder an einer zweiten Oberfläche (III) der ersten Scheibe,
- Verbinden der ersten Scheibe und der zweiten Scheibe über die thermoplastische Zwischenschicht, sodass die zweite Oberfläche (III) der ersten Scheibe zur thermoplastischen Zwischenschicht weist,
wobei das Absorptionsmittel als eine erste Abdeckschicht ausgebildet ist.

Die Abdeckschicht wird bei der Herstellung der Verbundscheibenanordnung im Siebdruck vor dem Biegen der einzelnen Scheiben aufgebracht.

Weiterhin umfasst die vorliegende Erfindung die Verwendung der erfindungsgemäßen Verglasungsanordnung in Fortbewegungsmitteln für den Verkehr auf dem Lande, in der Luft oder zu Wasser, insbesondere in Kraftfahrzeugen beispielsweise als Dachscheibe, Heckscheibe und/oder Seitenscheibe.

Im Rahmen der vorliegenden Erfindung können alle Ausführungsformen, die für einzelne Merkmale genannt sind, auch frei miteinander kombiniert werden, sofern diese nicht widersprüchlich sind.

Im Folgenden wird die Erfindung anhand von Figuren und Ausführungsbeispielen näher erläutert. Die Figuren sind eine schematische Darstellung und nicht maßstabsgetreu. Die Figuren schränken die Erfindung in keiner Weise ein.

Es zeigen:
- Figur 1: eine Draufsicht auf eine Ausgestaltung einer erfindungsgemäßen Verbundscheibe am Beispiel einer Dachscheibe eines Fahrzeugs,
- Figur 2: eine schematische Querschnittdarstellung einer ersten Ausgestaltung der erfindungsgemäßen Verglasungsanordnung, und
- Figur 3: eine schematische Querschnittdarstellung einer zweiten Ausgestaltung der erfindungsgemäßen Verglasungsanordnung.

Angaben mit Zahlenwerten sind in aller Regel nicht als exakte Werte zu verstehen, sondern beinhalten auch eine Toleranz von +/- 1 % bis zu +/- 10 %.

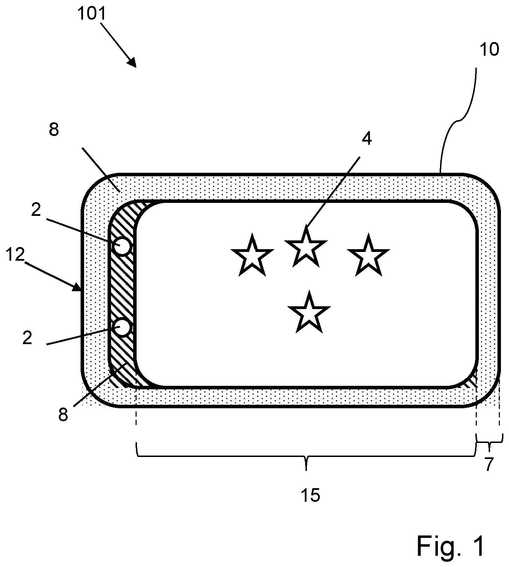

Figur 1 zeigt eine Draufsicht auf eine Ausgestaltung einer erfindungsgemäßen Verglasungsanordnung 10 mit einer Verbundscheibe 101 am Beispiel einer Dachscheibe für ein Fahrzeug. Alternativ kann die Verbundscheibe 101 eine Bauverglasung oder Bauteile eines Möbels oder elektrischen Geräts sein. Die Verglasungsanordnung 10 kann auch Teil einer Isolierverglasung sein und beispielsweise als Außen- oder Innenscheibe in einem Fenster eines Gebäudes dienen. Ferner ist die Verglasungsanordnung 10 in einem Innenraum einbaubar und kann beispielsweise als Verglasung eines Konferenzraums dienen.

Die Verglasungsanordnung 10 umfasst die Verbundscheibe 101 und zwei Lichtquellen 2. Die Lichtquellen 2 sind dazu vorgesehen, Licht im sichtbaren Bereich zu emittieren. Alternativ können sie infrarotes oder ultraviolettes Licht aussenden. Jede Lichtquelle 2 der Verglasungsanordnung 10 kann eine oder mehrere Leuchtdioden (LED, LED-Modul, LED-Leuchte) umfassen. Eine Lichtquelle 2 kann auch eine organische Leuchtdiode (OLED) umfassen.

Die Verbundscheibe 101 weist weiterhin vier Lichtauskopplungsmittel 4 auf. Ein Lichtauskopplungsmittel 4 koppelt Licht aus der Verbundscheibe 101 aus. Die Lichtauskopplungsmittel 4 sind an der ersten Oberfläche IV (Hauptoberfläche der Verbundscheibe 101) angeordnet. An der Stelle, an der ein Lichtauskopplungsmittels 4 angeordnet ist, kann das Licht über die Oberfläche IV aus der Verbundscheibe 101 austreten.

Das Lichtauskopplungsmittel 4 kann an jeder beliebigen Stelle der Oberfläche IV angeordnet sein. In Figur 1 umfasst das Lichtauskopplungsmittel 4 Strukturierungen der Oberfläche IV, an der die Totalreflexion innerhalb der Verbundscheibe 101 verhindert wird und Licht über die Oberfläche IV aus der Verbundscheibe 101 austritt. Alternativ kann das Lichtauskopplungsmittel 4 einen Aufdruck auf der Oberfläche IV oder in die Verbundscheibe 101 eingebrachte lichtstreuende, lichtbrechende, lichtbeugende oder lichtreflektierende Partikel oder Kavitäten umfassen.

Im vorliegenden Ausführungsbeispiel hier ist das Lichtauskopplungsmittel 4 weiterhin als ein Aufdruck aus feinen lichtstreuenden Partikeln auf die Oberfläche IV ausgebildet. Durch diese wird die Totalreflexion eines Lichtstrahls an der Grenzfläche zwischen Verbundscheibe 101 und umgebender Luft unterbrochen und Licht durch Streuung aus der Verbundscheibe 101 ausgekoppelt.

Die Verbundscheibe 101 weist im Randbereich 7 ein Absorptionsmittel 8 zur Absorption von in der Verbundscheibe 101 eingekoppeltem Licht 3 auf. Das Absorptionsmittel 8 ist als eine erste Abdeckschicht 9 ausgebildet, die sich rahmenartig im Randbereich 7 erstreckt.

Die Verbundscheibe 101 umfasst eine umlaufende Scheibenkante 12, wobei das Absorptionsmittel 8 sich umlaufend entlang der gesamten umlaufenden Scheibenkante 12 erstreckt. Alternativ kann das Absorptionsmittel 8 zumindest abschnittsweise entlang der umlaufenden Scheibenkante 12 angeordnet sein. Die Breite des Randbereichs 7 wird von der Scheibenkante 12 gemessen und beträgt beispielsweise 10 mm, 50 mm oder 100 mm.

Überraschend hat sich gezeigt, dass eine Anordnung von Absorptionsmittel 8 im Randbereich 7 der Verbundscheibe 101 besonders effektiv das Streulicht an der Scheibenkante 12 verhindert. Dies ist besonders vorteilhaft bei Scheiben, deren Kantenbereich im Einbauzustand nicht verdeckt sind. Dank des Absorptionsmittels 8 sind die freistehenden Kanten verdunkelt und die durch die Lichtauskopplungsmitte 4 ausgebildeten leuchtenden Muster (beispielsweise Sterne) gut erkennbar.

Die Verbundscheibe 101 weist einen Durchsichtbereich 15 auf, in dem die Verbundscheibe keine Abdeckschicht aufweist. Der Durchsichtbereich 15 der Verbundscheibe 101 macht mindestens 70% der Oberfläche der Verbundscheibe aus.

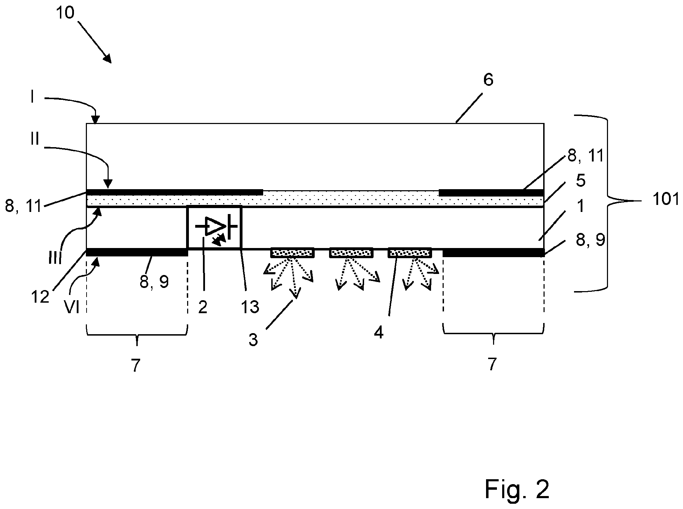

Figur 2 zeigt eine Querschnittsdarstellung der erfindungsgemäßen Verglasungsanordnung 10 aus Figur 1. Die Verbundscheibe 101 umfasst eine erste Scheibe 1, die über eine Zwischenschicht 5 mit einer zweiten Scheibe 6 verbunden ist. Die erste Scheibe 1, die Zwischenschicht 5 und die zweite Scheibe 6 wurden durch Lamination, insbesondere Autoklaven, miteinander verbunden. Die zweite Scheibe 6 weist eine erste Oberfläche I und eine zweite der ersten Oberfläche I gegenüberliegenden zweite Oberfläche II auf.

Die erste Scheibe 1 weist eine erste Oberfläche IV und eine zweite der ersten Oberfläche IV gegenüberliegenden zweite Oberfläche III auf. Die Seitenflächen der Verbundscheibe 101 sind orthogonal zu den Oberflächen III, IV angeordnet. Die erste Scheibe 1 und die zweite Scheibe 6 bestehen beispielsweise aus Kalk-Natronglas. Die thermoplastische Zwischenschicht 5 ist beispielsweise aus einer 0,76 mm dicken PVB-Folie gebildet. Die Dicke der ersten Scheibe 1 beträgt beispielsweise 1,6 mm und die Dicke der zweiten Scheibe 6 kann 2,1 mm betragen. Die erste Scheibe 1 und die zweite Scheibe 6 können beliebige Dicken ausweisen, beispielsweise gleich dick sein. Die Verbundscheibe 10 wird durch vier umlaufende Seitenflächen begrenzt.

Die erste Scheibe 1 kann vorgespanntes, teilvorgespanntes oder nicht-vorgespanntes Glas aufweisen. Alternativ kann die erste Scheibe 1 aus einem Kunststoff, beispielsweise aus Polycarbonat bestehen. Die erste Scheibe 1, die zweite Scheibe 6 und die Zwischenschicht 5 sind beispielsweise klar (weder getönt noch gefärbt). Alternativ kann die Zwischenschicht 5 eine getönte oder gefärbte PVB-Folie aufweisen. Alternativ oder zusätzlich kann die zweite Scheibe 6 dunkel getönt sein.

Die erste Scheibe 1 weist eine Aussparungen 13 auf, in welche eine der zwei Lichtquellen 2 eingesetzt ist. Die Aussparung 13 erstreckt sich durchgehend von der ersten Oberfläche IV der ersten Scheibe 1 bis zur zweiten Oberfläche III der ersten Scheibe 1. Die Zwischenschicht 5 wurde im Bereich der Aussparung 13 nicht entfernt. Die Lichtquelle 2 befindet sich vollständig innerhalb der Verbundscheibe 101. Das von der Lichtquelle 2 emittierte Licht 3 ist in Richtung der Scheibe 1 gerichtet. Die Scheibe 1 ist dazu vorgesehen das eingekoppelte Licht 3 in Längsrichtung durch die Scheibe 1 weiterzuleiten. Die erste Scheibe 1 stellt bevorzugt eine Innenscheibe und die zweite Scheibe 6 eine Außenscheibe dar. Die Innescheibe ist in Einbaulage einem Innenraum zugewandt. Die Außenscheibe ist in Einbaulage der äußeren Umgebung (z.B. eines Fahrzeugs) zugewandt. Diese Anordnung ist aufgrund der Position der Lichtquellen 2 in ersten Scheibe 1 besonders vorteilhaft, da die Lichtauskopplung in Richtung eines (Fahrzeugs-)Innenraum stattfindet, was zu einer angenehmen Atmosphäre im Innenraum führt. Alternativ kann die zweite Scheibe 6 auch die Innenscheibe und die erste Scheibe 1 die Außenscheibe darstellen.

Auf der ersten Oberfläche IV der ersten Scheibe 1 ist das Absorptionsmittel 8 aufgebracht. Das Absorptionsmittel 8 ist als eine erste blickdichte, dunkele, insbesondere schwarze oder graue Abdeckschicht 9 ausgebildet. Der erste Abdeckschicht 9 ist aus einer Druckfarbe ausgebildet. Da eine Lichtauskopplung an den Rändern der Verbundscheibe nicht gewünscht ist, weist der Randbereich 7 der ersten Scheibe 1 die Abdeckschicht 9 auf, die das Streulicht absorbiert. Dadurch wird mit geringem Aufwand ungewünschtes Streulicht im Randberiech 7 der Verbundscheibe 101 verhindert.

Zusätzlich ist eine zweite blickdichte, dunkele, insbesondere schwarze oder graue schwarze Abdeckschicht 11 an der zweiten Oberfläche II der zweiten Scheibe 6 angeordnet. Insbesondere überlappen sich die erste Abdeckschicht 9 und die zweite Abdeckschicht 11 in Durchsichtrichtung der Verbundscheibe 101. Die Lichtquelle 2 wird in Durchsichtrichtung von der zweiten Abdeckschicht 11 überdeckt. Bei den Abdeckschichten 9 und 11 handelt es sich um einen peripheren, d.h. rahmenartigen Abdeckdruck. Die Abdeckschichten 9 und 11 können blickdicht, opak und/oder vollflächig ausgebildet sein.

Der erste Abdeckschicht 9 und der zweite Abdeckschicht 11 enthalten Pigmente und Glasfritten. Sie können weitere chemische Verbindungen enthalten. Die Glasfritten können an- oder aufgeschmolzen und der Abdeckschicht 9 und 11 dadurch dauerhaft mit der Glasoberfläche verbunden (verschmolzen oder gesintert) werden. Das Pigment sorgt für die Opazität der Abdeckschicht 9, 11. Solche Abdeckschichten werden als Emaille aufgebracht. Alternativ können die erste Abdeckschicht 9 und/oder die zweite Abdeckschicht 11 als ein Klebeband, Farbschicht oder Primer ausgebildet sein. Das Klebeband, die Farbschicht und der Primer sind bevorzugt schwarz.

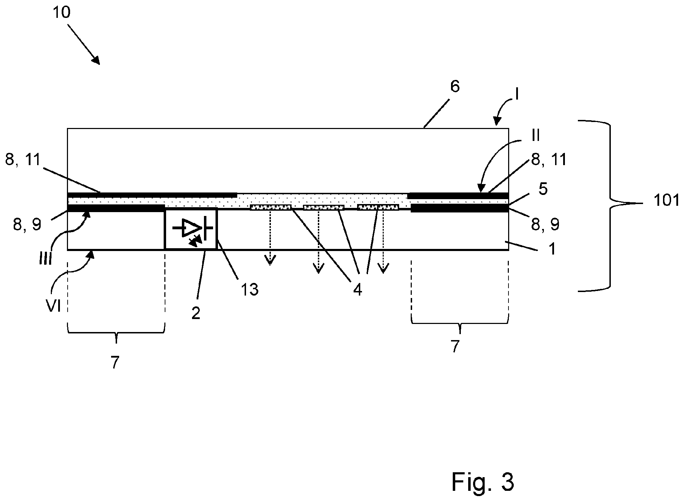

Figur 3 zeigt eine schematische Querschnittdarstellung einer zweiten Ausgestaltung der erfindungsgemäßen Verglasungsanordnung 10. Die in Figur 3 dargestellte Verglasungsanordnung 10 eignet sich besonders gut als Dachscheibe eines Kraftfahrzeugs. Die Verglasungsanordnung 10 aus Figur 3 hat einen ähnlichen Aufbau wie die Verglasungsanordnung 10 aus Figur 2. Die zweite Scheibe 6 (Außenscheibe) gleicht der Scheibe 6 aus Figur 2. Im Unterschied zur Figur 2 ist jedoch die erste Abdeckschicht 9 als Absorptionsmittel 8 auf der zweiten Oberfläche III der ersten Scheibe 1 aufgebracht. Im vorliegenden zweitem Ausführungsbeispiel ist das Lichtauskopplungsmittel 4 als ein Aufdruck aus feinen lichtstreuenden Partikeln auf die Oberfläche III ausgebildet.

Die erste Scheibe 1 ist beispielsweise dafür vorgesehen, in Einbaulage einem Innenraum eines Fahrzeugs zugewandt zu sein. Die erste Oberfläche IV der ersten Scheibe 1 ist vom Innenraum aus zugänglich, wogegen die erste Oberfläche I der zweiten Scheibe 6 bezüglich des Fahrzeuginnenraums nach außen weist.

### Bezugszeichenliste:

- 1: erste Scheibe
- 2: Lichtquelle
- 3: Licht
- 4: Lichtauskopplungsmittel
- 5: Zwischenschicht
- 6: zweite Scheibe
- 7: Randbereich
- 8: Absorptionsmittel
- 9: erste Abdeckschicht
- 10: Verglasungsanordnung
- 11: zweite Abdeckschicht
- 12: Scheibenkante
- 13: Aussparung
- 15: Durchsichtbereich

- 101: Verbundscheibe

- I: erste Oberfläche der zweiten Scheibe 6
- II: zweite Oberfläche der zweiten Scheibe 6
- III: zweite Oberfläche der ersten Scheibe 1
- IV: erste Oberfläche der ersten Scheibe 1

## Patentansprüche

1. Verglasungsanordnung (10) mindestens umfassend:
• eine erste Scheibe (1) mit einer ersten Oberfläche (IV) und einer zweiten Oberfläche (III), wobei die erste Scheibe (1) dazu vorgesehen ist, eingekoppeltes Licht zumindest teilweise weiterzuleiten, wobei die erste Scheibe (1) über eine Zwischenschicht (5) mit einer zweiten Scheibe (6) zu einer Verbundscheibe (101) verbunden ist,
• eine Lichtquelle (2) zum Erzeugen von in die erste Scheibe einkoppelbarem Licht (3),
• ein Lichtauskopplungsmittel (4) zum Auskoppeln von Licht aus der ersten Scheibe (1) über eine der zwei Oberflächen (III, IV),
• einen Randbereich (7), der sich von einer Scheibenkante (12) der ersten Scheibe (1) über mindestens 1 mm bis höchstens 500 mm auf einer der Oberflächen (III, IV) erstreckt, und
• ein Absorptionsmittel (8) zur Absorption von in der ersten Scheibe (1) eingekoppeltem Licht (3), das in dem Randbereich (7) angeordnet ist,
wobei das Absorptionsmittel (8) als eine erste Abdeckschicht (9) ausgebildet ist, die an der ersten Oberfläche (IV) und/oder an der zweiten Oberfläche (III) der ersten Scheibe (1) angeordnet ist,
wobei die erste Scheibe (1) mindestens eine Aussparung (13) zur Aufnahme der Lichtquelle (2) aufweist, und
wobei sich die erste Abdeckschicht (9) von der Scheibenkante (12) bis zu der Aussparung (13) erstreckt, in welcher die Lichtquelle (2) angeordnet ist.

2. Verglasungsanordnung nach Anspruch 1, wobei die zweite Scheibe (6) eine zweite Abdeckschicht (11) aufweist.

3. Verglasungsanordnung nach einem der Ansprüche 1 oder 2, wobei die erste Abdeckschicht (9) und/oder die zweite Abdeckschicht (11) blickdicht sind/ist.

4. Verglasungsanordnung nach einem der Ansprüche 1 bis 3, wobei die erste Abdeckschicht (9) sich von der Scheibenkante (12) der ersten Scheibe (1) über 1 mm bis 500 mm, bevorzugt 10 mm bis 150 mm, besonders bevorzugt 10 mm bis 15 mm erstreckt.

5. Verglasungsanordnung nach einem der Ansprüche 1 bis 4, wobei das Absorptionsmittel (8) sich umlaufend entlang der gesamten umlaufenden Scheibenkante (12) erstrecken.

6. Verglasungsanordnung nach einem der vorhergehenden Ansprüchen 1 bis 5, wobei die erste Abdeckschicht (9) und/oder die zweite Abdeckschicht (11) als eine opake Emaille, Klebeband oder Primer ausgebildet sind/ist.

7. Verglasungsanordnung nach Anspruch 6, wobei die Emaille Glasfritten und/oder mineralische Fritten und optional mindestens ein Pigment enthält, bevorzugt Glasfritten und/oder mineralische Fritten auf Basis von Oxiden ausgewählt aus Bor, Wismut, Zink, Silizium, Aluminium und Natrium.

8. Verglasungsanordnung nach einem der Ansprüche 2 bis 7, wobei sich die erste Abdeckschicht (9) und die zweite Abdeckschicht (11) zumindest teilweise in Dursichtrichtung der Verbundscheibe (101) überlappen.

9. Verglasungsanordnung nach einem der vorhergehenden Ansprüche, wobei die Lichtquelle (2) mindestens eine oder mehrere Leuchtdioden umfasst.

10. Verglasungsanordnung nach einem der vorhergehenden Ansprüche, wobei die Verbundscheibe (101) eine Dachscheibe eines Kraftfahrzeugs ist und die erste Scheibe (1) die Innenscheibe ist und die zweite Scheibe (6) die Außenscheibe ist.

11. Fahrzeug, insbesondere Personenkraftwagen, mit einer Verglasungsanordnung nach einem der vorhergehenden Ansprüche.

12. Verfahren zur Herstellung einer Verglasungsanordnung (10) nach einem der Ansprüche 1 bis 10, mindestens umfassend:
• Bereitstellen einer ersten Scheibe (1), einer zweiten Scheibe (2) und einer thermoplastischen Zwischenschicht (5),
• Aufbringen eines Absorptionsmittels (8) in dem Randbereich (7) an der ersten Scheibe (1),
• das Absorptionsmittel wird eingebrannt,
• Anordnen von mindestens einer Lichtquelle (2) an der ersten Scheibe (1),
• Anordnen eines Lichtauskopplungsmittels (4) an einer ersten Oberfläche (IV) und/oder an einer zweiten Oberfläche (III) der ersten Scheibe (1),
• Verbinden der ersten Scheibe (1) und der zweiten Scheibe (6) über die thermoplastische Zwischenschicht (5), sodass die zweite Oberfläche (III) der ersten Scheibe (6) zur thermoplastischen Zwischenschicht (5) weist,
wobei das Absorptionsmittel (8) als eine erste Abdeckschicht (9) ausgebildet ist.

13. Verwendung der Verglasungsanordnung (10) nach einem der Ansprüche 1 bis 10 in Fortbewegungsmitteln für den Verkehr auf dem Lande, in der Luft oder zu Wasser, insbesondere in Zügen, Schiffen und Kraftfahrzeugen beispielsweise als Dachscheibe, Heckscheibe und/oder Seitenscheibe.

## Claims

1. Glazing arrangement (10) at least comprising:
• a first pane (1) having a first surface (IV) and a second surface (III), wherein the first pane (1) is provided to transmit at least some coupled-in light, wherein the first pane (1) is connected to a second pane (6) via an intermediate layer (5) to form a laminated pane (101),
• a light source (2) for generating light (3) that can be coupled into the first pane,
• a light outcoupling means (4) for outcoupling light from the first pane (1) via one of the two surfaces (III, IV),
• a border region (7) which extends from a pane edge (12) of the first pane (1) over at least 1 mm up to at most 500 mm on one of the surfaces (III, IV), and
• an absorption means (8) for absorbing light (3) coupled into the first pane (1) and arranged in the border region (7),
wherein the absorption means (8) is designed as a first cover layer (9) arranged on the first surface (IV) and/or on the second surface (III) of the first pane (1),
wherein the first pane (1) has at least one recess (13) for receiving the light source (2), and
wherein the first cover layer (9) extends from the pane edge (12) to the recess (13) in which the light source (2) is arranged.

2. Glazing arrangement according to claim 1, wherein the second pane (6) has a second cover layer (11).

3. Glazing arrangement according to either claim 1 or claim 2, wherein the first cover layer (9) and/or the second cover layer (11) is/are non-transparent.

4. Glazing arrangement according to any of claims 1 to 3, wherein the first cover layer (9) extends from the pane edge (12) of the first pane (1) over 1 mm to 500 mm, preferably 10 mm to 150 mm, particularly preferably 10 mm to 15 mm.

5. Glazing arrangement according to any of claims 1 to 4, wherein the absorption means (8) extend circumferentially along the entire circumferential pane edge (12).

6. Glazing arrangement according to any of the preceding claims 1 to 5, wherein the first cover layer (9) and/or the second cover layer (11) is/are designed as an opaque enamel, adhesive tape, or primer.

7. Glazing arrangement according to claim 6, wherein the enamel contains glass frits and/or mineral frits and optionally at least one pigment, preferably glass frits and/or mineral frits based on oxides selected from boron, bismuth, zinc, silicon, aluminum and sodium.

8. Glazing arrangement according to any of claims 2 to 7, wherein the first cover layer (9) and the second cover layer (11) overlap at least partially in the viewing direction of the laminated pane (101).

9. Glazing arrangement according to any of the preceding claims, wherein the light source (2) comprises at least one or more light-emitting diodes.

10. Glazing arrangement according to any of the preceding claims, wherein the laminated pane (101) is a roof pane of a motor vehicle, and the first pane (1) is the inner pane, and the second pane (6) is the outer pane.

11. Vehicle, in particular a passenger car, comprising a glazing arrangement according to any of the preceding claims.

12. Method for producing a glazing arrangement (10) according to any of claims 1 to 10, at least comprising:
• providing a first pane (1), a second pane (2) and a thermoplastic intermediate layer (5),
• applying an absorption means (8) in the border region (7) on the first pane (1),
• baking the absorption means,
• arranging at least one light source (2) on the first pane (1),
• arranging a light outcoupling means (4) on a first surface (IV) and/or on a second surface (III) of the first pane (1),
• connecting the first pane (1) and the second pane (6) via the thermoplastic intermediate layer (5) such that the second surface (III) of the first pane (6) faces the thermoplastic intermediate layer (5),
wherein the absorption means (8) is designed as a first cover layer (9).

13. Use of the glazing arrangement (10) according to any of claims 1 to 10 in locomotion means for transportation on land, in the air or on water, in particular in trains, ships and motor vehicles, for example as a roof pane, rear pane and/or side pane.

## Revendications

1. Agencement de vitrage (10) comprenant au moins :
• une première vitre (1) comportant une première surface (IV) et une seconde surface (III), dans lequel la première vitre (1) est prévue pour transmettre au moins partiellement de la lumière couplée, dans lequel la première vitre (1) est reliée par l'intermédiaire d'une couche intermédiaire (5) à une seconde vitre (6) pour former une vitre feuilletée (101),
• une source de lumière (2) pour la génération de lumière (3) pouvant être couplée dans la première vitre,
• un moyen de découplage de lumière (4) pour le découplage de la lumière de la première vitre (1) par l'intermédiaire de l'une des deux surfaces (III, IV),
• une zone de bord (7) qui s'étend depuis un bord de vitre (12) de la première vitre (1) sur au moins 1 mm et au plus 500 mm sur l'une des surfaces (III, IV), et
• un moyen d'absorption (8) pour l'absorption de la lumière (3) couplée dans la première vitre (1) qui est disposé dans la zone de bord (7),
dans lequel le moyen d'absorption (8) est réalisé sous la forme d'une première couche de recouvrement (9) qui est disposée sur la première surface (IV) et/ou sur la seconde surface (III) de la première vitre (1),
dans lequel la première vitre (1) présente au moins un évidement (13) permettant de recevoir la source de lumière (2), et
dans lequel la première couche de recouvrement (9) s'étend depuis le bord de vitre (12) jusqu'à l'évidement (13) dans lequel est disposée la source de lumière (2).

2. Agencement de vitrage selon la revendication 1, dans lequel la seconde vitre (6) présente une seconde couche de recouvrement (11).

3. Agencement de vitrage selon l'une des revendications 1 ou 2, dans lequel la première couche de recouvrement (9) et/ou la seconde couche de recouvrement (11) sont opaques.

4. Agencement de vitrage selon l'une des revendications 1 à 3, dans lequel la première couche de recouvrement (9) s'étend depuis le bord de vitre (12) de la première vitre (1) sur 1 mm jusqu'à 500 mm, de préférence sur 10 mm jusqu'à 150 mm, de manière particulièrement préférée sur 10 mm jusqu'à 15 mm.

5. Agencement de vitrage selon l'une des revendications 1 à 4, dans lequel le moyen d'absorption (8) s'étend sur la périphérie le long de l'ensemble du bord de vitre (12) périphérique.

6. Agencement de vitrage selon l'une des revendications 1 à 5 précédentes, dans lequel la première couche de recouvrement (9) et/ou la seconde couche de recouvrement (11) sont réalisées sous la forme d'un émail opaque, d'un ruban adhésif ou d'un primaire.

7. Agencement de vitrage selon la revendication 6, dans lequel l'émail contient des frittes de verre et/ou des frittes minérales et éventuellement au moins un pigment, de préférence des frittes de verre et/ou des frittes minérales à base d'oxydes choisis parmi bore, bismuth, zinc, silicium, aluminium et sodium.

8. Agencement de vitrage selon l'une des revendications 2 à 7, dans lequel la première couche de recouvrement (9) et la seconde couche de recouvrement (11) se chevauchent au moins partiellement dans la direction de la transparence de la vitre feuilletée (101).

9. Agencement de vitrage selon l'une des revendications précédentes, dans lequel la source de lumière (2) comprend au moins une ou plusieurs diodes électroluminescentes.

10. Agencement de vitrage selon l'une des revendications précédentes, dans lequel la vitre feuilletée (101) est une vitre de toit d'un véhicule automobile et la première vitre (1) est la vitre intérieure et la seconde vitre (6) est la vitre extérieure.

11. Véhicule, en particulière voiture particulière, comportant un agencement de vitrage selon l'une des revendications précédentes.

12. Procédé pour la fabrication d'un agencement de vitrage (10) selon l'une des revendications 1 à 10, comprenant au moins :
• la fourniture d'une première vitre (1), d'une seconde vitre (2) et d'une couche intermédiaire (5) thermoplastique,
• l'application d'un moyen d'absorption (8) dans la zone de bord (7) sur la première vitre (1),
• le moyen d'absorption est cuit,
• la disposition d'au moins une source de lumière (2) sur la première vitre (1),
• la disposition d'un moyen de découplage de lumière (4) sur une première surface (IV) et/ou sur une seconde surface (III) de la première vitre (1),
• l'assemblage de la première vitre (1) et de la seconde vitre (6) par l'intermédiaire de la couche intermédiaire (5) thermoplastique, de sorte que la seconde surface (III) de la première vitre (6) est tournée vers la couche intermédiaire (5) thermoplastique,
dans lequel le moyen d'absorption (8) est conçu comme une première couche de recouvrement (9).

13. Utilisation de l'agencement de vitrage (10) selon l'une des revendications 1 à 10 dans des moyens de déplacement pour la circulation terrestre, aérienne ou maritime, en particulier dans des trains, bateaux et véhicules automobiles, par exemple en tant que vitre de toit, vitre arrière et/ou vitre latérale.
